(19) Europäisches Patentamt
European Patent Office
Office européen des brevets

(11) Veröffentlichungsnummer: **0 104 424**
**B1**

# (12) EUROPÄISCHE PATENTSCHRIFT

(45) Veröffentlichungstag der Patentschrift: **15.06.88**

(21) Anmeldenummer: **83108251.6**

(22) Anmeldetag: **22.08.83**

(51) Int. Cl.⁴: **C 08 G 18/80**, C 09 D 3/72, C 08 G 18/58, C 08 G 59/42, C 08 G 59/40

## (54) Verwendung blockierter Polyisocyanate als Härter für Hydroxylgruppen-haltige Bindemittel.

(30) Priorität: **01.09.82 DE 3232463**

(43) Veröffentlichungstag der Anmeldung:
**04.04.84 Patentblatt 84/14**

(45) Bekanntmachung des Hinweises auf die Patenterteilung:
**15.06.88 Patentblatt 88/24**

(84) Benannte Vertragsstaaten:
**AT BE CH DE FR GB IT LI NL SE**

(56) Entgegenhaltungen:
**EP-A-0 056 167**
**DE-A-2 708 611**
**FR-A-2 283 935**

(73) Patentinhaber: **BAYER AG**
**Konzernverwaltung RP Patentabteilung**
**D-5090 Leverkusen 1 Bayerwerk (DE)**

(72) Erfinder: **Meyer, Rolf-Volker, Dr.**
**Buchheimerstrasse 23**
**D-4150 Krefeld 1 (DE)**
Erfinder: **Hohl, Erwin, Dipl.-Ing.**
**Kreuzbergstrasse 49**
**D-4150 Krefeld 1 (DE)**
Erfinder: **Kreuder, Hans-Joachim, Dr.**
**Doerperhofstrasse 35**
**D-4150 Krefeld 1 (DE)**
Erfinder: **Rudolph, Hans, Dr.**
**Haydnstrasse 9**
**D-4150 Krefeld 1 (DE)**
Erfinder: **DE Cleur, Eckhard, Dr.**
**Aubruchsgraben 14**
**D-4100 Duisburg 46 (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 104 424 B1

Courier Press, Leamington Spa, England.

**Beschreibung**

Die Erfindung betrifft die Verwendung blockierter Polyisocyanate mit freien Carboxylgruppen als Härter für Bindemittel — insbesondere für Bindemittel pulverförmiger Überzugsmittel — die Hydroxylgruppen-haltige Polymere und Polyepoxide enthalten.

Für viele Beschichtungen ist hoher Glanz nicht erwünscht. Mit Hilfe von Mattierungsmitteln ist man in der Lage, Überzüge mit matter Oberfläche herzustellen. Zur Mattierung haben sich verschiedene Füllstoffe oder mit dem Bindemittel unverträgliche Polymerzuschläge, wie z.B. Polypropylenwachse oder Methylcellulose, bewährt. Zur Herstellung matter Überzüge aus Polyepoxid-Pulverlacken ist der Zusatz von Amidinsalzen mehrwertiger Carbonsäuren empfohlen worden (DE—A—2 324 686). Sämtliche aufgezählten Mattierungsmethoden sind mit Nachteilen verbunden: Entweder werden durch das Mattierungsmittel die mechanischen Eigenschaften der Überzüge ungünstig beeinflußt oder der Glanzgrad ist schlecht reproduzierbar, die Überzüge vergilben und/oder sind nicht wetterbeständig.

Die EP—A—56 167 betrifft die Verwendung von Carboxylgruppenhaltigen Polyurethan-Präpolymeren als Härter für Pulverlackbindemittel, die entweder Hydroxylgruppen enthalten oder diese durch Reaktion bilden können. Die Präpolymeren können 1 bis 40 Gew.-% verkappte Isocyanatgruppen und Carboxylgruppen entsprechend einer Säurezahl von 1 bis 200 enthalten. In der Beschreibung wird das Verhältnis Isocyanatgehalt/Säurezahl nicht erwähnt. Aus den Beispielen errechnen sich Werte von 0.47 bis 1.5. Die hergestellten Überzüge sind glatt und glänzend.

Auch die DE—A—27 08 611 betrifft Carboxylgruppen-haltige Polyurethan-Präpolymère, die als Härter u.a. für Pulverlackbindemittel empfohlen werden. Die Beschreibung offenbart ein bestimmtes Verhältnis von Epoxid- zu Carboxylgruppen nicht. Aus den Beispielen errechnen sich Werte von 0.36 bis 0.56; es wurden glänzende Filme erhalten.

Überraschenderweise wurde nun gefunden, daß sich die erwähnten Nachteile nicht einstellen, wenn man für Bindemittel, die Hydroxylgruppen-haltige Polymere und Polyepoxide enthalten, spezielle reversibel blockierte Polyisocyanate mit freien Carboxylgruppen als Härter einsetzt. Sie eignen sich nicht nur für lösungsmittelhaltige Lacksysteme, sondern auch hervorragend für pulverförmige Überzugsmittel.

Gegenstand der Erfindung ist die Verwendung von Verbindungen, die mehr als eine blockierte Isocyanatgruppe pro Molekül, eine Säurezahl von 20 bis 150, vorzugsweise von 25 bis 80, und eine Quotienten aus NCO-Gehalt (bezogen auf die Summe freier und reversibel blockierter Isocyanatgruppen) und Säurezahl von 0,075 bis 0,340, vorzugsweise von 0,100 bis 0,300, besitzen, als Härter für Bindemittel — insbesondere für Bindemittel pulverförmiger Überzugsmittel — die Hydroxylgruppen-haltige Polymere und Polyepoxide enthalten, in Mengen entsprechend einem Epoxid-/Carboxyl-Verhaltnis von 0,75 bis 1,25.

Bevorzugte erfindungsgemäß zu verwendende Härter sind Verbindungen der Formel

$$(HO_2C)_m—X—[(\underset{\underset{O}{\|}}{O C}—NH)_n—R—(NH—\underset{\underset{O}{\|}}{C}—Z)_p]_q$$

worin

X einen (q.n + m)-wertigen organischen Rest,
R einen (n + p)-wertigen organischen Rest,
Z den Rest eines Isocyanatblockierungsmittels ZH,
m eine Zahl von 1—3, vorzugsweise 1,
n eine Zahl von 1—4, vorzugsweise 1—2,
p eine Zahl von 1—5, vorzugsweise 1—2, und
q eine Zahl von 1—4, vorzugsweise 1—2, bedeuten

mit der Maßgabe, daß die Summe p + q größer als 2 ist.

X kann ein linearer oder verzweigter aliphatischer, cycloaliphatischer, araliphatischer oder aromatischer Rest mit vorzugsweise 1 bis 28, insbesondere 1 bis 17 C-Atomen sein; X kann aber auch ein aus einem Polyester mit einem als Zahlenmittel $\overline{M}_n$ bestimmten Molekulargewicht von 154 bis 1500 formal durch Streichen der Hydroxyl- und Carboxylgruppen entstandener Rest sein.

R kann ein linearer oder verzweigter aliphatischer, cycloaliphatischer, araliphatischer oder aromatischer Rest mit vorzugsweise 2 bis 18, insbesondere 6 bis 13, C-Atomen sein, der gegebenenfalls durch 1 bis 4 Chlor- oder Methoxygruppen substituiert oder durch 1 bis 2 Sauerstoffatome unterbrochen ist.

Weitere Informationen über die Bedeutung der Reste X und R können der untenstehenden Aufzählung von Ausgangsprodukten für die Herstellung der erfindungsgemäß zu verwendenden Härter entnommen werden.

Die erfindungsgemäß zu verwendenden Härter können aus Polyisocyanaten mit n + p Isocyanatgruppen, Hydroxycarbonsäuren mit n Hydroxyl- und m Carboxylgruppen und Isocyanatblockierungsmitteln ZH hergestellt werden.

Für diesen Zweck bevorzugte Polyisocyanate sind z.B. in "Methoden der Organischen Chemie" (Houben-Weyl), Bd. 14/2, 44. Aufl., Georg Thieme Verlag, Stuttgart 1963, S. 61—70 und bei W. Siefken, Liebigs Ann. Chem. *562*, 75—136 beschrieben und umfassen beispielsweise Diisocyanate wie:

1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1, 12-Dodecandiisocyanat, ω,ω'-Diisocyanatodipropylether,

Cyclobutan-1,3-diisocyanat, Cyclohexan-1,3- und -1,4-diisocyanat, 2,4- und 2,6-Diisocyanato-1-methylcyclohexan, 3-Isocyanatomethyl-3,5,5-trimethylcyclohexylisocyanat ("Isophorondiisocyanat"), 2,5- und 3,5-Bis-(isocyanatomethyl)-8-methyl-1,4-methano-decahydronaphthalin, 1,5-, 2,5-, 1,6- und 2,6-Bis(isocyanatomethyl)-4,7-methanohexahydroindan, 1,5-, 2,5-, 1,6- und 2,6-Bis-(isocyanato)-4,7-methano-hexahydroindan, Dicyclohexyl-2,4'-und -4,4'-diisocyanat, Perhydro-2,4'- ud -4,4'-diphenylmethan-diisocyanat, ω,ω'-Diisocyanato-1,4-diethylbenzol, 1,3- und 1,4-Phenylendiisocyanat, 4,4'-Diisocyanato-diphenyl, 4,4'-Diisocyanato-3,3'-dichlordiphenyl, 4,4'-Diisocyanto-3,3'-dimethoxy-diphenyl, 4,4'-Diisocyanato-3,3'-dimethyl-diphenyl, 4,4'-Diisocyanato-3,3'-diphenyl-diphenyl, Naphthylen-1,5-diisocyanat, 2,4- und 2,6-Toluylen-diisocyanat, N,N'-(4,4'-Dimethyl-3,3'-diisocyanatodiphenyl)-uretdion, m-Xylylen-diisocyanat, aber auch die Triisocyanate wie 2,4,4'-Triisocyanato-diphenylether, 4,4',4"-Triisocyanatotriphenylmethan, Tris(4-isocyanatophenyl)-thiophosphat, sowie beliebige Gemische dieser Isocyanate.

Besonders bevorzugt werden in der Regel die technisch leicht zugänglichen aliphatischen, cycloaliphatischen oder aromatischen Diisocyanate, insbesondere Hexamethylendiisocyanat, 3-Isocyanatomethyl-3,5,5-trimethylcyclohexylisocyanat und 2,4- bzw. 2,6-Toluylendiisocyanat sowie deren Isomerengemische.

Weitere bevorzugte Polyisocyanate zur Herstellung der erfindungsgemäß zu verwendenden Härter sind aus den obengenannten Polyisocyanaten und mehrwertigen Alkoholen mit 2—12 C-Atomen und 2—6 OH-Gruppen erhältliche Prepolymere. Andere bevorzugte Polyisocyanate entstehen durch Selbstaddition einiger der obengenannten Polyisocyanate; sie können neben freien Isocyanatgruppen noch Biuret-, Uretdion-, Uretonimin-, Isocyanurat-, Harnstoff- und/oder Allophanatgruppen enthalten.

Ganz besonders bevorzugte Polyisocyanate sind die aus Hexamethylendiisocyanat bzw. aus Isophorondiisocyanat durch Selbstaddition erhältlichen Oligomeren.

Für die Herstellung der erfindungsgemäß zu verwendenden Härter bevorzugte Hydroxycarbonsäuren sind — neben entsprechend modifizierten Polymeren, wie z.B. solchen auf Polyesterbasis — insbesondere niedermolekulare Verbindungen wie Glykolsäure, Äpfelsäure, Weinsäure, Salicylsäure, Bis-(4-hydroxyphenyl)-alkansäuren, wie z.B. Bis-(4-hydroxyphenyl)-essigsäure und Dialkylolalkansäuren, wie z.B. Dimethylolessigsäure, Diethylolpropionsäure, Dimethylolbuttersäure, 9,10-Dihydroxystearinsäure und insbesondere Dimethylolpropionsäure; aber auch niedermolekulare Umsetzungsprodukte aus 1 Mol Trimellithsäureanhydrid mit 1—2 Mol $C_2$—$C_{15}$-Diol.

Für die Herstellung der erfindungsgemäß zu verwendenden Härter bevorzugte Blockierungsmittel ZH werden unter Härtungsbedingungen, d.h. bei Temperaturen von 120 bis 220°C, wieder abgespalten. Sie umfassen Blockierungsmittel wie Alkohole, z.B. Methanol, Ethanol, Cyclohexanol, Oxime, Mercaptane, Lactame, z.B. γ-Pyrrolidon, Laurinlactam, Malonsäureester, Acetessigester und insbesondere ε-Captolactam (vgl. "Methoden der Organischen Chemie" (Houben-Weyl), Bd. 14/2, 4. Aufl., Georg Thieme Verlag, Stuttgart 1963, S. 61 ff.).

Die erfindungsgemäß zu verwendenden Härter können gemäß oder analog den in den DE—A—2 359 613 und 2 456 469 beschriebenen Verfahren hergestellt werden. Die gleichzeitige Addition von Blockierungsmittel und Hydroxycarbonsäure an das Polyisocyanat ist ebenso möglich wie die Zugabe des Polyisocyanats zur Mischung des Blockierungsmittels und der Hydroxycarbonsäure. Den Härter kann man jedoch auch nach einem Zweistufenverfahren herstellen, d.h. entweder durch Umsetzung des Polyisocyanats mit der Hydroxycarbonsäure und anschließende Blockierung der verbliebenen Isocyanatgruppen oder — vorzugsweise — durch Umsetzung des Polyisocyanats mit einem Unterschuß Blockierungsmittel und anschließende Reaktion mit der Hydroxycarbonsäure. Die Reaktion kann mit oder ohne Lösungsmittel durchgeführt werden. Bei leicht zur Vernetzung während der Herstellung neigenden Härtern ist die Mitverwendung von Lösungsmitteln, wie Toluol, Xylol, Essigester, die nach der Reaktion leicht wieder entfernt werden können, zu empfehlen.

Die erfindungsgemäß zu verwendenden Härter besitzen im allgemeinen einen Gehalt von 2 bis 20, vorzugsweise 4 bis 14, Gew.-% an reversibel blockierten Isocyanatgruppen.

Die Säurezahl des Härters kann nach DIN 53 183, der NCO-Gehalt (in Gew.-%, bezogen auf Härter) nach DIN 53 185 bestimmt werden, wobei sich der "NCO-Gehalt" auf die Summe der freien und reversibel blockierten Isocyanatgruppen bezieht.

Die EP—A—0056 167 betrifft ähnliche Härter, deren Quotienten Q jedoch außerhalb des von uns beanspruchten Bereichs liegen; dies trägt dazu bei, daß nur glänzende Beschichtungen erhalten werden.

Als hydroxylgruppenhaltige Polymere kommen solche in Frage, die Hydroxylzahlen im Bereich von 20 bis 400, vorzugsweise 30 bis 140, als Zahlenmittel dampfdruckosmometrisch bestimmte Molekulargewichte von 400 bis 10 000 und — vorzugsweise für pulverförmige Überzugsmittel — Erweichungspunkte von 40 bis 90°C (bestimmt durch Differentialthermoanalyse) besitzen, z.B. Hydroxylgruppen aufweisende Polyether, Polythioether, Polyacetale, Polycarbonate, Polyesteramide, vorzugsweise aber Polyester und Poly(meth)acrylate.

a) Die in Frage kommenden Hydroxylgruppe aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit Methylglykolsid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

b) Die in Frage kommenden Hydroxylgruppen aufweisenden Poly(meth)acrylate sind Homo- oder Copolymerisate von Acryl- und/oder Methacrylverbindungen, wobei die Monomeren beispielsweise aus der folgenden Aufzählung ausgewählt sein können:

Ester der Acrylsäure und Methacrylsäure mit zweiwertigen, gesättigten, aliphatischen Alkoholen mit 2 bis 4 C-Atomen, wie z.B. 2-Hydroxyethylacrylat, 2-Hydroxypropylacrylat, 4-Hydroxybutylacrylat und die entsprechenden Methacrylsäureester; Acrylsäure- und Methacrylsäurealkylester mit 1 bis 18, vorzugsweise 1 bis 8, C-Atomen in der Alkoholkomponente, wie z.B. Methylacrylat, Ethylacrylat, Propylacrylat, Isopropylacrylat, n-Butylacrylat, tert.-Butylacrylat, 2-Ethylhexylacrylat, Stearylacrylat und die entsprechenden Methacrylsäureester; Acrylsäure- und Methacrylsäurecyclohexylester; Acrylnitril und Methacrylnitril; Acrylamid und Methacrylamid; N-Methoxymethyl(meth)acrylsäureamid, ebenso Glycidylacrylat und -methacrylat.

Die Acrylatharze können nach den üblichen Methoden hergestellt werden, also durch Lösungs-, Suspensions-, Emulsions- oder Fällungspolymerisation; bevorzugt aber durch Massepolymerisation, die ihrerseits mittels UV-licht initiiert werden kann.

c) Auch die in Frage kommenden, mindestens 2, in der Regel 2 bis 8, vorzugsweise 2 bis 3, Hydroxylgruppen aufweisenden Polyether sind solche der an sich bekannten Art und werden z.B. durch Polymerisation von Tetrahydrofuran oder von Epoxiden wie Ethylenoxid, Propylenoxid, Butylenoxid, Styroloxid oder Epichlorhydrin mit sich selbst, z.B. in Gegenwart von Lewis-Katalysatoren wie Bortrifluorid, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether, wie sie z.B. in den DE—A—1 176 358 und 1 064 938 beschrieben werden, sowie auf Formit oder Formose gestartete Polyether (DE—A—2 639 083 bzw. 2 737 951), kommen in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind geeignet.

d) Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Comonomeren handelt es sich bei den Produkten z.B. um Polythiomischether, Polythioetherester oder Polythioetheresteramide.

e) Als Polyacetale kommen z.B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale, wie z.B. Trioxan (DE—A—1 694 128), lassen sich geeignete Polyacetale herstellen.

f) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol bzw. von Bisphenolen (wie z.B. den auf S. 12 genannten) mit Diarylcarbonaten, z.B. Diphenylcarbonat, oder Phosgen hergestellt werden können (DE—B—1 694 080, 1 915 908 und 2 221 751; DE—A—2 605 024).

g) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Bevorzugte Polyepoxide sind aliphatische, cycloaliphatische und aromatische Polyepoxide mit durchschnittlich mehr als einer 1,2-Epoxygruppe pro Molekül.

Zum einen handelt es sich hierbei um Polyepoxidverbindungen auf Basis mehrwertiger Phenole, beispielsweise aus Brenzkatechin, Resorcin, Hydrochinon, aus 4,4'-Dihydroxydiphenylmethan, aus 4,4'-Dihydroxy-3,3'-dimethyl-diphenylmethan, aus 4,4'-Dihydroxydiphenyldimethylmethan (Bisphenol A), aus 4,4'-Dihydroxydiphenylmethylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus den Chlorierungs- und Bromierungsprodukten der vorstehend genannten Diphenole, insbesondere aus Bisphenol A; zum anderen aus Novolaken (d.h. aus Umsetzungsprodukten von ein- oder mehrwertigen Phenolen mit Aldehyden, insbesondere Formaldehyd, in Gegenwart saurer Katalysatoren), aus Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. GB—A—1 017 612), aus Polyphenolen, die durch Kondensation von Phenolen und langkettigen, mindestens 2 Halogenatome enthaltenden Halogenparaffinen erhalten wurden (vgl. GB—A—1 024 288).

Bevorzugt werden handelsübliche, feste Epoxidharze des Typs Diglycidylether des Bisphenols A (d.h. Umsetzungsprodukte von Bisphenol A mit Epichlorhydrin), deren Epoxidäquivalentgewicht zwischen 400 und 2500 liegt, eingesetzt.

Ferner können als Polyepoxide Verbindungen wie Triglycidylisocyanurat und/oder dessen Oligomere und Triglycidylurazol sowie dessen Oligomere sowie Mischungen der genannten Stoffklassen eingesetzt werden.

Mit den erfindungsgemäß zu verwendenden Härtern lassen sich in der Regel Glanzgrade von 30 und weniger (gemessen nach Gardner, Beobachtungswinkel 60°) erreichen. Der Glanzgrad kann durch Verwendung von Katalysatoren, die als die Epoxidhärtung beschleunigend bekannt sind, weiter verringert werden (z.B. auf etwa 10); gleichzeitig erhöhen diese Katalysatoren auch die Elastizität und die Schlagzähigkeit der Überzüge. Bevorzugte derartige Katalysatoren sind z.B. metallorganische Verbindungen wie Dibutylzinndilaurat, Zinn-(II)-octoat, quatäre Ammoniumsalze, Cholinderivate und Amidine, insbesondere cyclische Amidine wie Imidazoline und Tetrahydropyrimidine. Besonders geeignete Amidine sind beispielsweise in der DE—A—3 041 834 beschrieben. Die Katalysatoren können in Mengen von 0,1—10, vorzugsweise 1—5 Gew.-%, bezogen auf den erfindungsgemäß zu verwendenden Härter, eingesetzt werden. Die Zugabe des Katalysators kann bei Herstellung des gebrauchsfähigen Lacksystems, aber auch zur Schmelze des erfindungsgemäß zu verwendenden Härters erfolgen. Durch Mischen der erfindungsgemäß zu verwendenden Härter mit üblichen Carboxylgruppen-freien blockierten Polyisocyanaten lassen sich mittlere Glanzgrade erhalten.

Das Mischungsverhältnis von Hydroxylgruppen-haltigem Polymer, Polyepoxid und erfindungsgemäß zu verwendendem Härter wird so gewählt, daß auf eine Carboxylgruppe 0,75 bis 1,25 Epoxidgruppen und auf eine Hydroxylgruppe vorzugsweise 0,7 bis 1,4, besonders bevorzügt 0,8 bis 1,2, verkappte Isocyanatgruppen kommen.

Falls die erfindungsgemäß zu verwendenden Härter in Pulverlacken eingesetzt werden, geschieht dies üblicherweise folgendermaßen:

Die erfindungsgemäß zu verwendenden Härter werden mit den Hydroxylgruppen-haltigen Polymeren und den Polyepoxiden und gegebenenfalls weiteren Zusätzen zunächst gemischt und in der Schmelze homogenisiert. Dies kann in geeigneten Aggregaten, wie z.B. beheizbaren Knetern, vorzugsweise jedoch durch Extrudieren, erfolgen, wobei die Extrusionstemperatur so zu wählen ist, daß ein Maximum an Scherkraft auf die Mischung einwirkt. Dabei sollte eine Temperaturobergrenze von 140°C nicht überschritten werden.

Die extrudierte Masse wird nach Abkühlung auf Raumtemperatur und nach einer geeigneten Vorzerkleinerung zu einem Pulverlack gemahlen, wobei je nach dem Verwendungszweck mittlere Teilchengrößen von ca. 40—90 µm, vorzugsweise jedoch ca. 50 µm, angestrebt werden. Ein evtl. vorhandener Grobkornanteil von Teilchengrößen von mehr als 90 µm wird durch Absieben entfernt.

Das Auftragen der so hergestellten Pulverlacke auf geeignete Substrate kann nach den bekannten Verfahren, wie z.B. durch elektrostatisches Pulversprühen, Wirbelsintern, elektrostatisches Wirbelsintern sowie im Flammsprühverfahren erfolgen.

Nach dem Auftagen des Pulverlackes nach einem der genannten Verfahren werden die beschichteten Werkstücke zur Aushärtung 10 bis 60 Minuten auf eine Temperatur von 170 bis 220°C erhitzt.

Die erfindungsgemäß zu verwendenden Härter können auchh mit aus Lösung zu verarbeitenden OH-Polymeren eingesetzt werden, was ebenfalls zu matten Lackierungen führt. Bevorzugte Lösungsmittel sind z.B. Ketone, Ester, Ether und aromatische Kohlenwasserstoffe, vorzugsweise Ketone und Ester.

## Beispiele

Herstellung der in den Beispielen verwendet Härter.

### Härter 1

226 g (2,0 Mol) ε-Caprolactam und 135 g (1 Mol) 2,2-Bis-(hydroxymethyl)propionsäure wurden in 200 ml Toluol gelöst und bei 100°C unter Stickstoffatmosphäre innerhalb von 30 Minuten mit 444 g (2,0 Mol) Isophorondiisocyanat versetzt. Nach Abklingen der leicht exothermen Reaktion wurde 1 Stunde bei 115 bis 120°C nachgerührt und dann die Hauptmenge Toluol (ca. 150 g) im Vakuum abdestilliert. Das beim Abkühlen kristallisierende Produkt wurde bei 80°C/10 Torr getrocknet. Man erhielt 795 g farblose Kristalle, Säurezahl 70, Fp. 120—128°C.

### Härter 2

180 g Isophorondiisocyanat-Trimeres (1,2 Äquivalente freies NCO) wurden unter Stickstoffatmosphäre innerhalb von 10 Minuten bei 120 bis 130°C mit 90 g (0,8 Mol) ε-Caprolactam portionsweise umgesetzt.

Nach 20-minütigem Rühren bei 130°C wurden 26,8 g (0,2 Mol) 2,2'-Bis-(hydroxymethyl)-propionsäure portionsweise bei 130°C so zugesetzt (15 Minuten), daß nur wenig $CO_2$-Entwicklung einsetzte. Nach 30 Minuten Nachrühren bei 130 bis 140°C wurden nach dem Abkühlen 291 g farblose Kristalle (Fp. 115—125°C, Säurezahl 39) gewonnen.

Härter 3

Analog der Herstellung von Härter 2 wurden 234 g Hexamethylendiisocyanat-Trimeres (1,2-Äquivalente freies NCO) mit 90 g (0,8 Mol) ε-Caprolactam und 26,8 g 2,2'-Bis-(hydroxymethyl)-propionsäure umgesetzt. Man gewann 346 g farblose Kristalle (Fp. 62—68°C, Säurezahl 31).

Härter 4

274 g (1 Mol) 4,4'-Diisocyanato-dicyclohexylmethan (Isomerengemisch mit 30,8% NCO-Gehalt) wurden bei 130°C mit 113 g (1 Mol) ε-Caprolactam umgesetzt, das entstandene teilblockierte Polyisocyanat 15 Minuten bei 130°C nachgerührt und auf 80°C abgekühlt. Nach Zugabe von 50 ml Toluol wurden bei 70°C 67 g (0,5 Mol) Dimethylolpropionsäure zugegeben und dann 30 Minuten bei 140°C gerührt. Durch Entfernen des Lösungsmittels erhielt man 445 g hellgeble Kristalle (Fp. ca. 110°C; Säurezahl 57).

Härter 5 (Vergleich)

Analog der Herstellung von Härter 2 wurden 180 g (1,2 Äquivalente freies NCO) Isophorondiisocyanat-Trimeres, 113 g (1,0 Mol) ε-Caprolactam und 13,4 g (0,1 Mol) 2,2'-Bis-(hydroxymethyl)-propionsäure umgesetzt. Es wurden 296 g farblose Kristalle (Fp. 90—95°C, Säurezahl 19) gewonnen.

Verwendungsbeispiele (Herstellung von Pulverlacken)

Die nachfolgend genannten Teile sind Massenteile.

Beispiel 1

48,4 Teile eines Hydroxylpolyesters aus Neopentylglykol, Terephthalsäure, Hexandiol-(1,6), Trimethylolpropan mit einem Erweichungspunkt von 63°C (DTA) und einer Hydroxylzahl von 50 wurden mit 18,5 Teilen des Härters 1 und mit 2,2 Teilen Triglycidylisocyanurat sowie mit 33,0 Teilen eines hochbeständigen Titandioxid-Rutils und mit 0,4 Teilen eines Verlaufmittels auf Basis eines handelsüblichen Acrylatoligomeren zunächst trocken gemischt. Diese Mischung wurde auf einem Laborextruder bei Temperaturen von 80 bis 120°C in der Schmelze dispergiert. Das Extrudat wurde nach Abkühlung und Vorzerkleinerung auf einer Gebläsemühle auf eine durchschnittliche Korngröße von 50 µm zu einem Pulverlack gemahlen. Nach Absieben des vorhandenen Grobkornanteils oberhalb 90 µm wurde der gebrauchsfertige Pulverlack auf doppelt dekapierte, entfettete Prüfbleche (Länge 16,5 cm, Breite 65 mm, Stärke 0,8 mm) mit einer elektrostatischen Sprühvorrichtung bei einer Negativspannung von ca. 60 kV aufgesprüht. Die Bleche wurden anschließend bei 180°C 30 Minuten eingebrannt.

Die Beschichtungen wurden in einer Stärke von 50 µm nach den folgenden praxisüblichen Methoden auf ihre Eigenschaften geprüft:

| | | |
|---|---|---|
| Erichsentiefung (Din 53 156) | → | "Tiefung" |
| Glanz, 60° ∢ (DIN 67 530) | → | "Glanz" |
| Impact reverse (Kugel Ø 12,7 mm) | → | IMR, 1 kg |

Acetonfestigkeit, beurteilt nach folgender Abstufung:

| | |
|---|---|
| −1 . . . . . −50 | Anzahl Hübe mit acetongetränktem Wattebausch bis zum Durchscheuern des Lackfilms |
| 2 m | nach 50 Hüben matter, weicher Film |
| 2 lm | nach 50 Hüben leicht matter, weicher Film |
| 2 | weicher Film nach 50 Hüben |
| 1 | leicht oberflächenempfindlicher Lackfilm nach 50 Hüben |
| 0 | keine Veränderungen |

Gitterschnitt (DIN 53 151).

Die Prüfergebnisse sind in der Tabelle zusammengestellt.

Beispiel 2

Beispiel 1 wurde wiederholt mit dem Unterschied, daß bei der Extrusion der Komponenten zur härtbaren Pulverlackmischung zusätzlich 0,8% des Amidins

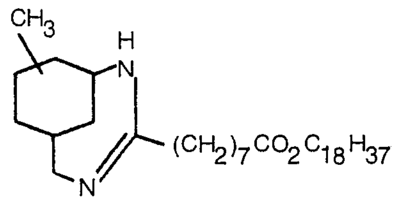

als Katalysator zugesetzt wurden.

Verarbeitung und Prüfung erfolgten wie in Beispiel 1 beschrieben.

Beispiel 3

Analog Beispiel 1 wurde nach folgender Rezeptur ein Pulverlack hergestellt:

43,1 Teile Hydroxylpolyester aus Beispiel 1,
16,3 Teile Härter 2,
1 Teil Triglycidylurazol,
33 Teile Titandioxid-Rutil,
0,4 Teile Verlaufsmittel und
0,3 Teile Amidin aus Beispiel 2.

Verarbeitung und Prüfung erfolgten wie in Beispiel 1 beschrieben.

Vergleich 1

Analog Beispiel 1 wurde ein Pulverlack hergestellt aus:

51,6 Teilen Hydroxylpolyester aus Beispiel 1,
14,2 Teilen Härter 5,
0,5 Teilen Triglycidylisocyanurat,
33 Teilen Titandioxid-Rutil,
0,4 Teilen Verlaufsmittel und
0,1 Teil Amidin aus Beispiel 2.

Verarbeitung und Prüfung erfolgten wie in Beispiel 1 beschrieben.

Beispiel 4

Aus 41,5 Teilen Hydroxylpolyester aus Beispiel 1, 16,2 Teilen Härter 3, 7,9 Teilen Epoxidharz des Typs Diglycidylether des Bisphenols A mit einem Epoxidäquivalentgewicht von 900, 33 Teilen Titandioxid-Rutil, 0,4 Teilen Verlaufsmittel und 0,2 Teilen 2-Phenylimidazolin wurde analog Beispiel 1 ein Pulverlack hergestellt.

Verarbeitung und Prüfung erfolgten wie in Beispiel 1 beschrieben.

Vergleich 2

Analog Beispiel 1 wurde aus 45 Teilen Hydroxylpolyester aus Beispiel 1, 14,4 Teilen Härter 4, 6,8 Teilen Epoxidharz aus Beispiel 4, 33 Teilen Titandioxid-Rutil und 0,4 Teilen Verlaufsmittel ein Pulverlack hergestellt.

Verarbeitung und Prüfung erfolgten wie in Beispiel 1 beschrieben.

Beispiel 5

Analog Beispiel 1 wurde aus 50,5 Teilen Hydroxylpolyester aus Beispiel 1, 8,1 Teilen Härter 1, 1 Teil Triglycidylurazol, 6,8 Teilen eines mit ε-Caprolactam blockierten Isophorondiisocyanat-Trimeren mit einem latenten NCO-Gehalt von 14,8%, 33 Teilen Titandioxid-Rutil und 0,4 Teilen Verlaufsmittel ein Pulverlack hergestellt.

Verarbeitung und Prüfung erfolgten wie in Beispiel 1 beschrieben.

| | erfindungsgemäße Beispiele | | | | | Vergleich 1 | Vergleich 2 |
|---|---|---|---|---|---|---|---|
| | 1 | 2 | 3 | 4 | 5* | | |
| Erichsentiefung (mm) | 10 | 10 | 10 | 10 | 10 | 10 | 10 |
| Impact reverse (cm/kg) | 120 | 150 | 150 | 150 | 150 | 150 | 40 |
| Glanz 60° * | 27 | 10 | 28 | 23 | 64 | 77 | 30 |
| Acetonfestigkeit | 0—1 | 0—1 | 0—1 | 0—1 | 1 | 1—2 | 0—1 |
| Gitterschnitt | 0 | 0 | 0 | 0 | 0 | 0 | 0 |
| Quotient Q des Härters | 0,165 | 0,165 | 0,262 | 0,270 | **0,343 | 0,808 | 0,210 |

* Mischung aus erfindungsgemäß zu verwendendem Härter und Härter des Standes der Technik ergibt Halbglanz
** Mittelwert aus beiden Härten

**Patentansprüche**

1. Verwendung von Verbindungen, die mehr als eine blockierte Isocyanatgruppe pro Molekül, eine Säurezahl von 20 bis 150 und einen Quotienten Q aus NCO-Gehalt (bezogen auf die Summe freier und reversibel blockierter Isocyanatgruppen) und Säurezahl von 0.075 bis 0.340 besitzen, als Härter für Bindemittel — insbesondere für Bindemittel pulverförmiger Überzugsmittel — die Hydroxylgruppenhaltige Polymere und Polyepoxide enthalten, in Mengen entsprechend einem Epoxid-/Carboxyl-Verhältnis von 0.75 bis 1.25.

2. Verwendung nach Anspruch 1, dadurch gekennzeichnet, daß die Härter eine Säurezahl von 25 bis 80 besitzen.

3. Verwendung nach Ansprüchen 1 und 2, dadurch gekennzeichnet, daß der Quotient Q 0,100 bis 0,300 beträgt.

4. Verwendung nach Ansprüchen 1 bis 3, dadurch gekennzeichnet, daß die Härter der Formel

$$(HO_2C)_m-X-[(O\underset{\underset{O}{\|}}{C}-NH)_n-R-(NH-\underset{\underset{O}{\|}}{C}-Z)_p]_q$$

entsprechen, worin
X einen (q.n + m)-wertigen organischen Rest,
R einen (n + p)-wertigen organischen Rest,
Z den Rest eines Isocyanatblockierungsmittels ZH,
m eine Zahl von 1—3,
n eine Zahl von 1—4,
p eine Zahl von 1—5, und
q eine Zahl von 1—4 bedeuten
mit der Maßgabe, daß die Summe p + q größer als 2 ist.

**Revendications**

1. Utilisation de composés contenant plus d'un groupe isocyanate par molécule, ayant un indice d'acide de 20 à 150 et présentant un quotient Q entre la teneur en NCO (exprimée par la somme des groupes isocyanate libres et des groupes isocyanate bloqués de manière réversible) et l'indice d'acide qui est de 0,075 à 0,340, en tant que durcisseurs pour des liants — en particulier des liants de produits de revêtement en poudre — qui contiennent des polymères à groupes hydroxy et des polyépoxydes, en quantités correspondant à un rapport époxyde/carboxyle de 0,75 à 1,25.

2. Utilisation selon la revendication 1, caractérisée en ce que les durcisseurs ont un indice d'acide de 25 à 80.

3. Utilisation selon les revendications 1 et 2, caractérisée en ce que le quotient Q a une valeur de 0,100 à 0,300.

4. Utilisation selon les revendications 1 à 3, caractérisée en ce que les durcisseurs répondent à la formule

$$(HO_2C)_m-X-[(\underset{\underset{O}{\|}}{OC}-NH)_n-R-(NH-\underset{\underset{O}{\|}}{C}-Z)_p]_q$$

dans laquelle

X représente un groupe organique de valence (q.n + m),
R représente un groupe organique de valence (n + p),
Z est le radical d'un agent bloquant des isocyanates ZH,
m est un nombre allant de 1 à 3,
n est un nombre allant de 1 à 4,
p est un nombre allant de 1 à 5, et
q est un nombre allant de 1 à 4,

avec la condition supplémentaire que la somme p + q est supérieure à 2.

## Claims

1. The use of compounds containing more than one blocked isocyanate group per molecule and having an acid value of 20 to 150 and a quotient Q of NCO content (based on the sum of free and reversibly blocked isocyanate groups) and acid values of 0.075 to 0.340 as hardeners for binders, more especially for binders of powder-form coating compositions, containing hydroxyl-containing polymers and polyepoxides in quantities corresponding to an epoxide/carboxyl ratio of 0.75 to 1.25.

2. The use claimed in claim 1, characterized in that the hardeners have an acid value of 25 to 80.

3. The use claimed in claims 1 and 2, characterized in that the quotient Q is 0.100 to 0.300.

4. The use claimed in claims 1 to 3, characterized in that the hardeners correspond to the following formula

$$(HO_2C)_m-X-[(\underset{\underset{O}{\|}}{OC}-NH)_n-R-(NH-\underset{\underset{O}{\|}}{C}-Z)_p]_q$$

in which

X is a (q.n + m)-valent organic radical,
R is an (n + p)-valent organic radical,
Z is the residue of an isocyanate blocking agent ZH,
m is a number of 1 to 3,
n is a number of 1 to 4,
p is a number of 1 to 5, and
q is a number of 1 to 4,

with the proviso that the sum p + q is greater than 2.